# EUROPÄISCHE PATENTSCHRIFT

(11) **EP 1 340 774 B1**
(45) Veröffentlichungstag und Bekanntmachung des Hinweises auf die Patenterteilung: **07.09.2005**
(21) Anmeldenummer: 03001923.6
(22) Anmeldetag: 30.01.2003
(51) Int. Cl.: C08F 265/02, C08F 267/02, C08L 51/00, D04H 1/64

(54) **Verfahren zur Herstellung einer wässrigen thermisch härtbaren Polymerdispersion**
Process for preparing an aqueous thermohardening polymer dispersion
Procédé de préparation d' une dispersion aqueuse thermodurcissable

(30) Priorität: 27.02.2002 DE 10208361
(43) Veröffentlichungstag der Anmeldung: 03.09.2003
(73) Patentinhaber: BASF Aktiengesellschaft, 67056 Ludwigshafen (DE)
(72) Erfinder: Laubender, Matthias, Dr., 67105 Schifferstadt (DE); Gerst, Matthias, Dr., 67433 Neustadt (DE); Reck, Bernd, Dr., 67269 Grünstadt (DE)

(56) Entgegenhaltungen:
- WO-A-01/27163

## Beschreibung

Die vorliegende Erfindung betrifft ein Verfahren zur Herstellung einer wässrigen Polymerdispersion, enthaltend dispergierte Polymerteilchen mindestens eines Polymerisats A1, das erhältlich ist durch semi-kontinuierliche radikalische Emulsionspolymerisation von ethylenisch ungesättigten Monomeren in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin und
- bis zu 20 Gew.-% mindestens eines weiteren Monomers,
welches dadurch gekennzeichnet, dass
a) wenigstens eine Teilmenge der ethylenisch ungesättigten Monomeren,
b) eine Teilmenge des Wassers,
c) wenigstens eine Teilmenge des Polymerisats A2 und gegebenenfalls
d) Teil- oder Gesamtmengen weiterer Hilfsstoffe
dem Polymerisationsgefäß gemeinsam ohne Ausbildung einer Emulsion über eine Zulaufleitung zugeführt werden.

In der deutschen Patentanmeldung DE-A 19949592 ist die Herstellung wässriger thermisch härtbarer Polymerdispersionen vom vorgenannten Typ ausführlich beschrieben. Dabei wird die Zufuhr von Polymerisat A2 gemeinsam mit den das Polymerisat A1 bildenden Monomeren in Form einer wässrigen Emulsion zum Reaktionsgefäß als vorteilhaft offenbart. Ebenfalls beschrieben ist die Zufuhr der Reaktionskomponenten zum Reaktionsgefäß über zwei oder mehrere getrennte Zuläufe.

Aus apparativen sowie mess- und regeltechnischen Erwägungen ist die Zufuhr der Reaktionskomponenten über nur einen Zulauf zu bevorzugen. Problematisch an der Zufuhr der Reaktionskomponenten in Form einer wässrigen Emulsion - welche üblicherweise entweder in einem Vorreaktor oder über statische und/oder dynamische Mischelemente in der Zulaufleitung hergestellt wird - über nur einen Zulauf ist, dass mit zunehmendem Gehalt an Polymerisat A2 die Viskosität der wässrigen Emulsion stark ansteigt, wodurch bei den üblicherweise verwendeten Pumpen und Rohrleitungen hohe Dosierzeiten resultieren.

Aufgabe der vorliegenden Erfindung war es, ein Verfahren für die Herstellung vorgenannter wässriger thermisch härtbarer Polymerdispersionen bereitzustellen, welches mit nur einem Zulauf für die ethylenisch ungesättigten Monomeren, das Wasser, das Polymerisat A2 und gegebenenfalls weiterer Hilfsstoffe auskommt und welches mit den üblicherweise verwendeten Pumpen und Rohrleitungen verbesserte Dosierzeiten ermöglicht.

Demgemäss wurde das eingangs definierte Verfahren gefunden.

Im Zusammenhang mit den Monomerkomponenten des Polymerisats A1 steht Alkyl im Folgenden vorzugsweise für geradkettige oder verzweigte C₁-C₂₂-Alkylreste, insbesondere C₁-C₁₂- und besonders bevorzugt C₁-C₆-Alkylreste, wie Methyl, Ethyl, n-Propyl, n-Butyl, sek.-Butyl, tert.-Butyl, n-Pentyl, n-Hexyl, 2-Ethylhexyl, n-Dodecyl oder n-Stearyl.
Hydroxyalkyl steht vorzugsweise für Hydroxy-C₁-C₆-alkyl, wobei die Alkylreste geradkettig oder verzweigt sein können, und insbesondere für 2-Hydroxyethyl, 2- oder 3-Hydroxypropyl, 2-Methyl-2-hydroxypropyl und 4-Hydroxybutyl.
Cycloalkyl steht vorzugsweise für C₅-C₇-Cyclohexyl, insbesondere Cyclopentyl und Cyclohexyl.
Aryl steht vorzugsweise für Phenyl oder Naphthyl.

Das Polymerisat A1 stellt ein radikalisches Emulsionspolymerisat dar. Zu dessen Herstellung können alle durch radikalische Polymerisation polymerisierbaren Monomere eingesetzt werden. Im Allgemeinen ist das Polymerisat aufgebaut aus
- 80 bis 100 Gew.-%, bevorzugt 85 bis 99,9 Gew.-%, bezogen auf das Gesamtgewicht der Monomere für das Polymerisat, wenigstens eines ethylenisch ungesättigten Hauptmonomeren sowie
- 0 bis 20 Gew.-%, bevorzugt 0,1 bis 15 Gew.-%, bezogen auf das Gesamtgewicht der Monomere für das Polymerisat, wenigstens eines ethylenisch ungesättigten Comonomeren.

Das Hauptmonomer ist vorzugsweise ausgewählt unter
- Estern aus vorzugsweise 3 bis 6 C-Atomen aufweisenden α,β-monoethylenisch ungesättigten Mono- oder Dicarbonsäure, wie Acrylsäure, Methacrylsäure, Maleinsäure, Fumarsäure und Itaconsäure mit C₁-C₁₂-, vorzugsweise C₁-C₈-Alkanolen. Derartige Ester sind insbesondere Methyl-, Ethyl-, n-Butyl-, Isobutyl-, tert.-Butyl-, n-Pentyl-, iso-Pentyl- und 2-Ethylhexylacrylat und/oder -methacrylat;
- vinylaromatischen Verbindungen, bevorzugt Styrol, α-Methylstyrol, o-Chlorstyrol, Vinyltoluolen und Mischungen davon;
- Vinylestern von C₁-C₁₈-Mono- oder Dicarbonsäuren, wie Vinylacetat, Vinylpropionat, Vinyl-n-butyrat, Vinyllaurat und/oder Vinylstearat;
- Butadien;
- linearen 1-Olefinen, verzweigtkettigen 1-Olefinen oder cyclischen Olefinen, wie z. B. Ethen, Propen, Buten, Isobuten, Penten, Cyclopenten, Hexen oder Cyclohexen. Des Weiteren sind auch Metallocen-katalysiert hergestellte Oligoolefine mit endständiger Doppelbindung, wie z. B. Oligopropen oder Oligohexen geeignet;
- Acrylnitril, Methacrylnitril;
- Vinyl- und Allylalkylethern mit 1 bis 40 Kohlenstoffatomen im Alkylrest, wobei der Alkylrest noch weitere Substituenten, wie eine oder mehrere Hydroxylgruppen, eine oder mehrere Amino- oder Diaminogruppen oder eine bzw. mehrere Alkoxylatgruppen tragen kann, wie z. B. Methylvinylether, Ethylvinylether, Propylvinylether und 2-Ethylhexylvinylether, Isobutylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Besonders bevorzugte Hauptmonomere sind Styrol, Methylmethacrylat, n-Butylacrylat, Ethylacrylat, 2-Ethylhexylacrylat, Vinylacetat, Ethen und Butadien. Selbstverständlich ist es möglich, Gemische vorgenannter Monomere einzusetzen.

Das Comonomer ist vorzugsweise ausgewählt unter
- ethylenisch ungesättigten Mono- oder Dicarbonsäuren oder deren Anhydriden, vorzugsweise Acrylsäure, Methacrylsäure, Methacrylsäureanhydrid, Maleinsäure, Maleinsäureanhydrid, Fumarsäure und/oder Itaconsäure;
- C₁-C₄-Hydroxyalkylestern von C₃-C₆-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Estern von mit 2 bis 50 Mol Ethylenoxid, Propylenoxid, Butylenoxid oder Mischungen davon alkoxylierten C₁-C₁₈-Alkoholen mit den erwähnten Säuren, wie z. B. Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen;
- Vinylphosphonsäuren und deren Salzen, Vinylphosphonsäuredimethylester und anderen phosphorhaltigen Monomeren;
- Alkylaminoalkyl(meth)acrylaten oder Alkylaminoalkyl(meth)acrylamiden oder deren Quarternisierungsprodukten, wie z. B. 2-(N,N-Dimethylamino)-ethyl(meth)acrylat oder 2-(N,N,N-Trimethylammonium)-ethylmethacrylat-chlorid, 3-(N,N-Dimethyl-amino)-propyl(meth)acrylat, 2-Dimethylaminoethyl(meth)acrylamid, 3-Dimethylaminopropyl(meth)acrylamid, 3-Trimethylammoniumpropyl(meth)acrylamid-chlorid und Mischungen davon;
- Allylestern von C₁-C₃₀-Monocarbonsäuren;
- N-Vinylverbindungen, wie N-Vinylformamid, N-Vinyl-N-methylformamid, N-Vinylpyrrolidon, N-Vinylimidazol, 1-Vinyl-2-methyl-imidazol, 1-Vinyl-2-methylimidazolin, 2-Vinylpyridin, 4-Vinylpyridin, N-Vinylcarbazol und/oder N-Vinylcaprolactam;
- Diallyldimethylammoniumchlorid, Vinylidenchlorid, Vinylchlorid, Acrolein, Methacrolein;
- 1,3-Diketogruppen enthaltenden Monomeren, wie z. B. Aceto-acetoxyethyl(meth)acrylat oder Diacetonacrylamid, harnstoffgruppenhaltigen Monomeren, wie Ureidoethyl(meth) acrylat, Acryl-amidoglykolsäure, Methacrylamidoglykolatmethylether;
- Silylgruppen enthaltenden Monomeren, wie z. B. Trimethoxysilylpropylmethacrylat;
- Glycidylgruppen enthaltenden Monomeren, wie z. B. Glycidylmethacrylat.

Besonders bevorzugte Comonomere sind Hydroxyethylacrylat, Hydroxypropylacrylat, Hydroxybutylacrylat, Hydroxyethylmethacrylat, Glycidylgruppen enthaltende Monomere und Mischungen davon. Ganz besonders bevorzugt sind Hydroxyethylacrylat und Hydroxyethylmethacrylat, insbesondere in Mengen von 2 bis 20 Gew.-%, bezogen auf die Gesamtmenge der zur Herstellung des Polymerisats A1 eingesetzten Monomeren.

Das Polymerisat A2 enthält 50 bis 99,5 Gew.-%, bevorzugt 70 bis 99 Gew.-%, solcher Strukturelemente eingebaut, die sich von mindestens einer ethylenisch ungesättigten Mono- oder Dicarbonsäure ableiten. Diese Säuren können in dem Polymerisat gewünschtenfalls auch teilweise oder vollständig in Form eines Salzes vorliegen. Bevorzugt ist die saure Form.

Vorzugsweise ist das Polymerisat A2 zu mehr als 10 g/l (bei 25 °C) in Wasser löslich.

Brauchbare ethylenisch ungesättigte Carbonsäuren wurden bereits vorstehend im Zusammenhang mit dem Polymerisat A1 genannt. Bevorzugte Carbonsäuren sind C₃- bis C₁₀-Monocarbonsäuren und C₄- bis C₈-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Bei der Herstellung des Polymerisats A2 können selbstverständlich auch anstelle der Säuren oder zusammen mit den Säuren deren Anhydride, wie Maleinsäureanhydrid, Acrylsäure- oder Methacrylsäureanhydrid eingesetzt werden.

Das Polymerisat A2 enthält ferner 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit mindestens einem hydroxylgruppenhaltigen Amin, in einpolymerisierter Form.

Das Polymer A2 liegt vorzugsweise als Kammpolymer mit kovalent gebundenen Aminseitenketten vor.

Als Komponente der Ester geeignete Monocarbonsäuren sind die zuvor genannten C₃- bis C₁₀-Monocarbonsäuren, insbesondere Acrylsäure, Methacrylsäure, Crotonsäure, und Mischungen davon.

Als Komponente der Halbester und Diester geeignete Dicarbonsäuren sind die zuvor genannten C₄- bis C₈-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt unter sekundären und tertiären Aminen, die wenigstens einen C₆- bis C₂₂-Alkyl-, C₆- bis C₂₂-Alkenyl-, Aryl-C₆- bis C₂₂-alkyl- oder Aryl-C₆- bis C₂₂-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylenoxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat A2 eine ungesättigte Verbindung auf Basis einer Aminkomponente eingebaut, die wenigstens ein Amin der allgemeinen Formel

R^{c}NR^{a}R^{b}

enthält, wobei
- R^{c}: für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
- R^{a}: für Hydroxy-C₁-C₆-alkyl oder einen Rest der Formel II

-(CH₂CH₂O)ₓ(CH₂CH(CH₃)O)_{y}-H (II)

steht, wobei
in der Formel II die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,
- R^{b}: für Wasserstoff, C₁- bis C₂₂-Alkyl, Hydroxy-C₁-C₆-alkyl, C₆ bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann, oder R^{b} für einen Rest der Formel III

-(CH₂CH₂O)ᵥ(CH₂CH(CH₃)O)_{w}-H (III)
steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen.

Bevorzugt steht R^{c} für C₈- bis C₂₀-Alkyl oder C₈- bis C₂₀-Alkenyl, wobei der Alkenylrest 1,2 oder 3 nicht benachbarte Doppelbindungen aufweisen kann. Vorzugsweise steht R^{c} für den Kohlenwasserstoffrest einer gesättigten oder ein- oder mehrfach ungesättigten Fettsäure. Bevorzugte Reste R^{c} sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Besonders bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte C₁₄-, C₁₆- und C₁₈-Alkylamine enthalten oder Kokosamine, die gesättigte, einfach und zweifach ungesättigte C₆-C₂₂-, vorzugsweise C₁₂-C₁₄-Alkylamine enthalten. Zur Alkoxylierung geeignete Amingemische sind z. B. verschiedene Armeen®-Marken der Fa. Akzo oder Noram®-Marken der Fa. Ceca.

Geeignete, kommerziell erhältliche alkoxylierte Amine sind z. B. die Noramox® -Marken der Fa. Ceca, bevorzugt ethoxylierte Oleylamine, wie Noramox®05 (5 EO-Einheiten), sowie die unter der Marke Lutensol®FA vertriebenen Produkte der Fa. BASF AG.

Die Einpolymerisierung der vorgenannten Ester, Halbester und Diester bewirkt im Allgemeinen eine ausgeprägte Stabilisierung der erfindungsgemäßen Polymerdispersion. Die erfindungsgemäßen Polymerdispersionen behalten ihre kolloidale Stabilität der Latexpartikel bei Verdünnung mit Wasser oder verdünnten Elektrolyten oder Tensidlösungen zuverlässig bei.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und (C₁- bis C₄)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Nach einer bevorzugten Ausführungsform erfolgt die Herstellung der ungesättigten Ester, Halbester oder Diester und deren weitere Umsetzung zu den erfindungsgemäß eingesetzten Polymerisaten A2 ohne Zwischenisolierung der Ester und vorzugsweise nacheinander im selben Reaktionsgefäß.

Bevorzugt wird zur Herstellung der Polymerisate A2 ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben den Bestandteilen Carbonsäure sowie Ester, Halbester und/oder Diester kann das Polymerisat A2 noch 0 bis 20 Gew.-%, bevorzugt 0,1 bis 10 Gew.-%, andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl(meth)acrylat, n-Butyl(meth)acrylat, 2-Ethylhexyl(meth)acrylat und Mischungen davon besonders bevorzugt sind.

Die Herstellung der Polymerisate A2 erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie im Folgenden für die Herstellung der erfindungsgemäßen Polymerdispersionen näher beschrieben werden.

Die Herstellung der Polymerisate A2 kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure sowie 0 bis 20 Gew.-% der zuvor genannten anderen Polymere eingebaut enthält, mit mindestens einem hydroxylgruppenhaltigen Amin umgesetzt werden.

Geeignete ethylenisch ungesättigte Mono- und Dicarbonsäuren sind die zuvor als Komponente der Polymerisate A1 und A2 genannten. Geeignete Amine, die wenigstens eine Hydroxylgruppe aufweisen, sind ebenfalls die zuvor genannten. Die Säuren können in dem zur polymeranalogen Umsetzung eingesetzten Polymerisat gewünschtenfalls teilweise oder vollständig in Form eines Derivates, bevorzugt eines C₁- bis C₆-Alkylesters, vorliegen.

Die Herstellung der Polymerisate A2 durch polymeranaloge Umsetzung erfolgt vorzugsweise in einem geeigneten nichtwässrigen Lösungsmittel oder in Substanz. Bei der Umsetzung in Substanz kann die Aminkomponente gegebenenfalls im Überschuss eingesetzt werden, um als Lösungsmittel zu dienen. Bevorzugt sind Lösungsmittel, die mit Wasser ein Azeotrop bilden und somit eine einfache Entfernung des bei der Reaktion gebildeten Wassers ermöglichen. Vorzugsweise erfolgt die Umsetzung in Gegenwart eines Veresterungskatalysators, wie zuvor beschrieben. Die Reaktionstemperatur liegt bevorzugt in einem Bereich von 100 bis 200 °C. Bei der Reaktion gebildetes Wasser kann durch geeignete Maßnahmen, wie z. B. Abdestillieren, entfernt werden.

Das erfindungsgemäße Verfahren zeichnet sich insbesondere dadurch aus, dass eine Teilmenge, häufig ≤ 50 Gew.-% oder ≤ 40 Gew.-% und oft ≤ 30 Gew.-% oder ≤ 20 Gew.-% der insgesamt eingesetzten Wassermenge vor der Polymerisation im Polymerisationsgefäß vorgelegt und nach Initiierung der radikalischen Polymerisation
a) wenigstens eine Teilmenge der ethylenisch ungesättigten Monomeren,
b) eine Teilmenge des Wassers,
c) wenigstens eine Teilmenge des Polymerisats A2 und gegebenenfalls
d) Teil- oder Gesamtmengen weiterer Hilfsstoffe
dem Polymerisationsgefäß gemeinsam ohne Ausbildung einer Emulsion über eine Zulaufleitung zugeführt werden.

Im neuen Verfahren kann eine Teilmenge der ethylenisch ungesättigten Monomeren, gegebenenfalls in Anwesentheit einer geeigneten Saatlatex, im Polymeriationsgefäß vorgelegt werden. Dabei kann die im Reaktionsgefäß vorgelegte Monomerenmenge ≤ 50 Ges.-%, ≤ 20 Gew.-% oder ≤ 10 Gew.-%, jeweils bezogen auf die Gesamtmonomerenmenge, betragen. Bevorzugt werden jedoch dem Polymerisationsgefäß über die Zulaufleitung ≥ 50 Ges.-%, ≥ 70 Gew.-%, ≥ 90 Gew.-% und häufig die Gesamtmenge der ethylenisch ungesättigten Monomeren unter Polymerisationsbedingungen zugeführt.

Die über die Zulaufleitung während der Polymerisation zugeführte Wassermenge beträgt üblicherweise ≥ 50 Gew.-%, ≥ 60 Gew.-% oder ≥ 70 Gew.-%, jeweils bezogen auf die Gesamtwassermenge. Bevorzugt wird im gesamten Verfahren entionisiertes Wasser verwendet.

Vom Polymerisat A2 wird während der Polymerisation wenigstens eine Teilmenge, häufig ≥ 50 Ges.-%, ≥ 70 Ges.-%, ≥ 90 Gew.-% oder sogar die Polymerisat A2-Gesamtmenge (Feststoff) über die Zulaufleitung zugeführt. Selbstverständlich ist es auch möglich, eine Polymerisat A2-Teilmenge, oft ≤ 50 Ges.-%, ≤ 20 Gew.-% oder ≤ 10 Gew.-%, jeweils bezogen auf die Polymerisat A2-Gesamtmenge (Feststoff), im Polymerisationsgefäß vor Beginn der Polymerisation vorzulegen. Häufig wird Polymerisat A2 in Form einer wässrigen Lösung eingesetzt.

Vorteilhaft ist es, wenn dem Polymerisationsgefäß unter Polymerisationsbedingungen ≥ 50 Gew.-%, häufig ≥ 60 Gew.-% und oft ≥ 70 Gew.-% der insgesamt zur Herstellung des Polymerisats A1 eingesetzten ethylenisch ungesättigten Monomeren und > 50 Gew.-%, häufig ≥ 60 Gew.-% und oft ≥ 70 Gew.-% des Polymerisats A2 (Feststoff) gemeinsam über die Zulaufleitung zugeführt werden.

Das Gewichtsverhältnis von Polymerisat A2 (Feststoff) zur Gesamtmenge der zur Herstellung des Polymerisats A1 eingesetzten ethylenisch ungesättigten Monomeren liegt vorzugsweise im Bereich von 7:1 bis 1:7, insbesondere 3:1 bis 1:3.

Wesentlich ist, dass die Polymerisation im Beisein von Hilfsstoffen, wie beispielsweise wenigstens einem oberflächenaktiven alkoxylierten Alkylamin, einem hydroxygruppenhaltigen Vernetzer und/oder einem Reaktionsbeschleuniger durchgeführt werden kann. Diese Hilfsstoffe und die optional zu verwendeten Mengen sind ausführlich in der deutschen Patentanmeldung DE-A 19949592 auf Seite 6, Zeile 45 bis Seite 8, Zeile 10, beschrieben und sollen vom Gegenstand der vorliegenden Erfindung mit umfasst sein. Dabei kann die Gesamtmenge der Hilfsstoffe im Polymerisationsgefäß vor der Polymerisation vorgelegt werden. Es ist aber auch möglich, gegebenenfalls eine Teilmenge im Polymerisationsgefäß vorzulegen und die verbleibende Restmenge bzw. die Gesamtmenge der Hilfsstoffe dem Polymerisationsgefäß während der Polymerisation über die Zulaufleitung zuzuführen. Bevorzugt wird wenigstens eine Teilmenge der optional verwendeten Hilfsstoffe während der Polymerisation über die Zulaufleitung zugegeben.

Für das erfindungsgemäße Verfahren werden bevorzugt insgesamt
- 50 bis 70 Gew.-Teile ethylenisch ungesättigte Monomere,
- 30 bis 50 Gew.-Teile Polymerisat A2 (Feststoff) sowie gegebenenfalls
- 0 bis 10 Gew.-Teile oberflächenaktives alkoxyliertes Alkylamin,
- 0 bis 20 Gew.-Teile hydroxygruppenhaltiger Vernetzer und/oder
- 0 bis 5 Gew.-Teile Reaktionsbeschleuniger
zur Polymerisation eingesetzt.

Die Herstellung der Polymerdispersion erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, iso-Propanol, n-Butanol, Aceton oder Methylethylketon, bis zu einem Anteil von etwa 30 Vol.-% enthalten sein.

Die Polymerisation wird in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z. B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z. B. Mischungen aus Wasserstoffperoxid und Natriumperoxidisulfat. Für die Polymerisation in wässrigem Medium werden bevorzugt wasserlösliche Initiatoren eingesetzt.

Dabei kann die Gesamtmenge der Initiatoren im Polymerisationsgefäß vorgelegt werden. Es ist aber auch möglich, gegebenenfalls lediglich eine Teilmenge der Initiatoren im Polymerisationsgefäß vorzulegen und die gegebenenfalls verbleibende Restmenge bzw. Gesamtmenge der Initiatoren dem Reaktionsgemisch, häufig in Form einer wässrigen Lösung und/oder gemeinsam mit der Mischung der Komponenten a) bis d), bei Polymerisatiönstemperatur zuzuführen.

Als Reaktionstemperatur für die radikalische wässrige Emulsionspolymerisation kommt, abhängig von den verwendeten Polymerisationsinitiatoren, der gesamte Bereich von 0 bis 170 °C in Betracht. Dabei werden in der Regel Temperaturen von 50 bis 120 °C, häufig 60 bis 110 °C und oft ≥ 70 bis 100 °C angewendet. Die radikalische wässrige Emulsionspolymerisation kann bei einem Druck kleiner, gleich oder größer 1 bar (absolut) durchgeführt werden. Vorteilhaft wird die radikalische wässrige Emulsionspolymerisation unter Inertgasatmosphäre, wie beispielsweise unter Stickstoff oder Argon durchgeführt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden häufig in Mengen von 0,05 bis 5 Gew.-%, bezogen auf die Monomere, eingesetzt.

Die mögliche Weiterbehandlung der nach dem erfindungsgemäßen Verfahren erhaltenen wässrigen thermisch härtbaren Polymerdispersionen und deren Verwendung ist in der DE-A 19949592 ausführlich beschrieben.

Durch das neue Verfahren ist es möglich, die vorgenannten wässrigen thermisch härtbaren Polymerdispersionen in den im Betriebsmaßstab üblichen Polymerisationsreaktoren mit kurzen Zykluszeiten herzustellen. Insbesondere vorteilhaft ist, dass keine zur Voremulgierung der Monomeren, des Wassers und des Polymerisats A2 sowie gegebenenfalls weiterer Hilfsstoffe benötigten Apparate erforderlich sind und dass die Zuführung aufgrund der deutlich geringeren Viskosität mit den üblichen Pumpen und Zufuhrleitungen erfolgen kann.

Die nachfolgenden, nicht einschränkenden Beispiele erläutern die Erfindung.

### Analytik

Die Feststoffgehalte wurden bestimmt, indem eine aliquote Menge bei 140 °C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Messergebnisse dar.

Die Viskosität der Zulaufmischungen/-emulsionen wurde in einem Brookfield-Viskosimeter bei einer Schergeschwindigkeit von 50 s⁻¹ bei 23 °C gemäß ISO 1652 bestimmt.

Die Bestimmung der Koagulatmenge erfolgte durch Filtration der auf 20 bis 25 °C (Raumtemperatur) abgekühlten wässrigen Polymerdispersion über ein Sieb mit einer Maschenweite von 125 µm. Das Sieb wurde hierzu vor der Filtration gewogen. Nach der Filtration spülte man das Sieb mit wenig entionisiertem Wasser und trocknete es dann im Trockenschrank bei 100 °C und Atmosphärendruck bis zur Gewichtskonstanz. Nach Abkühlen auf Raumtemperatur wurde das Sieb erneut gewogen. Der Gehalt an Koagulat ergab sich als Differenz der beiden Wägungen, jeweils bezogen auf die filtrierte Menge an wässriger Polymerdispersion.

Die Viskosität der Polymerdispersionen wurde in einem Rheomat der Fa. Physica bei einer Schergeschwindigkeit von 250 s⁻¹ bei 23 °C gemäß DIN 53019 bestimmt.

### Beispiele

Analog Beispiel 1a der DE-A 19949592 wurde eine wässrigen Lösung eines carboxylgruppenhaltigen Polymerisats A2 mit einem Feststoffgehalt von 43 Gew.-% hergestellt.

Diese Polymerisat A2-Lösung wurde bei 23 °C mit Monomeren und Wasser versetzt und durch Rühren mit einem Laborblattrührer in eine homogene Mischung überführt (Rührgeschwindigkeit: 20 Umdrehungen pro Minute; Rührzeit: 10 Sekunden), welche für ca. 15 bis 30 Minuten stabil war. Durch stärkeres Rühren (Rührgeschwindigkeit: 500 Umdrehungen pro Minute; Rührzeit: 60 Sekunden) wurden mit Mischungen gleicher Zusammensetzung über mehrere Wochen stabile Emulsionen erhalten. Unmittelbar nach der Herstellung der Mischungen bzw. der Emulsionen wurden deren Viskositäten bestimmt. Die zur Herstellung der unterschiedlichen Mischungen und Emulsionen verwendeten Mengen an Polymerisat A2-Lösung, Monomere und Wasser sowie die daraus resultierenden Viskositäten der Mischungen und Emulsionen sind in Tabelle 1 aufgelistet.

**Tabelle 1:**

| Viskositäten von Polymerisat A2-enthaltenden Monomerenmischungen (M) und Monomerenemulsionen (E) | | | | |
|---|---|---|---|---|
| | Polymerisat A2-Lösung [g] | Monomere [g] | Wasser [g] | Viskosität [mPas] |
| M1 | 463 | 145 Styrol 55 Methylmethacrylat | 64 | 397 |
| E1 | 463 | 145 Styrol 55 Methylmethacrylat | 64 | 1690 |
| M2 | 347 | 145 Styrol 55 Methylmethacrylat | 89 | 443 |
| E2 | 347 | 145 Styrol 55 Methylmethacrylat | 89 | 956 |

### Herstellung der Polymerdispersionen 1 bis 4

In je einem heiz- und kühlbaren 2 1-Glasreaktor, ausgerüstet mit einem Ankerrührer, Rückflußkühler, Evakuier- und Dosiereinrichtungen wurden bei Raumtemperatur unter Stickstoffatmosphäre 140 g entionisiertes Wasser und 10 Gew.-% eines Zulaufs 2 vorgelegt und unter Rühren (120 Umdrehungen pro Minute) auf 85 °C erhitzt. Bei dieser Temperatur wurden innerhalb von 3,5 Stunden die voran beschriebene Monomerenemulsion E1 und E2 und innerhalb von einer Stunde die voran beschriebenen Mengen der Komponenten der Monomerenmischung M1 und M2 als Zulauf 1 dem Reaktionsansatz über eine Zulaufleitung zudosiert. Parallel zum jeweiligen Zulauf 1 wurde die Restmenge des Zulaufs 2 über eine separate Zulaufleitung zugegeben. Nach Ende der Zuläufe 1 und 2 ließ man die Reaktionsansätze noch 30 Minuten unter weiterem Rühren bei Reaktionstemperatur nachpolymerisieren und kühlte anschließend die Reaktionsgemische auf Raumtemperatur ab. Die Viskositäten, Feststoff- und Koagulatgehalte der so erhaltenen wässrigen Polymerdispersionen sind in Tabelle 2 zusammengestellt.

### Zulauf 1:

Komponenten und Mengen der eingesetzen Monomerenmischungen M1 und M2 sowie Monomerenemulsionen E1 und E2 gemäß Tabelle 1.

### Zulauf 2:

62 g entionisiertes Wasser
2,0 g Natriumperoxodisulfat

**Tabelle 2:**

| Viskositäten, Feststoffgehalte (FG) und Koagulatgehalte der in Abhängigkeit der Form der Monomerenzugabe erhaltenen Polymerdispersionen | | | | |
|---|---|---|---|---|
| Polymerdispersion Nr. | Zulauf 1 | Viskosität [mPas] | FG [%] | Koagulatgehalt [%] |
| 1 | M1 | 643 | 50,2 | 0,003 |
| 2 | E1 | 885 | 50,1 | 0,001 |
| 3 | M2 | 737 | 49,7 | 0,001 |
| 4 | E2 | 1150 | 49,9 | 0,004 |

Wie aus Tabelle 2 ersichtlich ist, weisen auch die aus den Monomerenmischungen M1 und M2 im Vergleich zu den aus den Monomerenemulsionen E1 und E2 erhaltenen Polymerdispersionen eine geringere Viskosität, bei sonst gleichen Produkteigenschaften, auf.

## Patentansprüche

1. Verfahren zur Herstellung einer wässrigen Polymerdispersion, enthaltend dispergierte Polymerteilchen mindestens eines Polymerisats A1, das erhältlich ist durch semi-kontinuierliche radikalische Emulsionspolymerisation von ethylenisch ungesättigten Monomeren in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin und
- bis zu 20 Gew.-% mindestens eines weiteren Monomers,
**dadurch gekennzeichnet, dass**
a) wenigstens eine Teilmenge der ethylenisch ungesättigten Monomeren,
b) eine Teilmenge des Wassers,
c) wenigstens eine Teilmenge des Polymerisats A2 und gegebenenfalls
d) Teil- oder Gesamtmengen weiterer Hilfsstoffe
dem Polymerisationsgefäß gemeinsam ohne Ausbildung einer Emulsion über eine Zulaufleitung zugeführt werden.

2. Verfahren nach Anspruch 1, **dadurch gekennzeichnet, dass** dem Reaktionsgefäß wenigstens 50 Gew.-% der ethylenisch ungesättigten Monomeren und wenigstens 50 Gew.-% des Polymerisats A2 gemeinsam zugeführt werden.

3. Verfahren nach einem der Ansprüche 1 oder 2, **dadurch gekennzeichnet, dass** als weiterer Hilfsstoff wenigstens ein oberflächenaktives alkoxyliertes Alkylamin, ein hydroxygruppenhaltiger Vernetzer und/oder ein Reaktionsbeschleuniger eingesetzt werden.

4. Verfahren nach Anspruch 3, **dadurch gekennzeichnet, dass** zur Polymerisation
- 50 bis 70 Gew.-Teile ethylenisch ungesättigte Monomere,
- 30 bis 50 Gew.-Teile Polymerisat A2 sowie gegebenenfalls
- 0 bis 10 Gew.-Teile oberflächenaktives alkoxyliertes Alkylamin,
- 0 bis 20 Gew.-Teile hydroxygruppenhaltiger Vernetzer und/oder
- 0 bis 5 Gew.-Teile Reaktionsbeschleuniger
eingesetzt werden.

## Claims

1. A process for preparing an aqueous polymer dispersion comprising dispersed polymer particles of at least one addition polymer A1 obtainable by semicontinuous free-radical emulsion polymerization of ethylenically unsaturated monomers in the presence of an addition polymer A2 synthesized from
- from 50 to 99.5% by weight of at least one ethylenically unsaturated monocarboxylic and/or dicarboxylic acid,
- from 0.5 to 50% by weight of at least one ethylenically unsaturated compound selected from the esters of ethylenically unsaturated monocarboxylic acids and the monoesters and diesters of ethylenically unsaturated dicarboxylic acids with an amine containing at least one hydroxyl group, and
- up to 20% by weight of at least one further monomer,
which comprises supplying
a) at least one portion of the ethylenically unsaturated monomers,
b) a portion of the water,
c) at least one portion of the polymer A2, and, if desired,
d) portions or entireties of further auxiliaries
to the polymerization vessel together, without an emulsion being formed, through a feed line.

2. A process as claimed in claim 1, wherein at least 50% by weight of the ethylenically unsaturated monomers and at least 50% by weight of the polymer A2 are supplied to the reaction vessel together.

3. A process as claimed in either of claims 1 and 2, wherein said further auxiliaries comprise at least one surface-active alkoxylated alkylamine, a hydroxyl-containing crosslinker and/or a reaction accelerator.

4. A process as claimed in claim 3, wherein the polymerization is conducted using
- from 50 to 70 parts by weight of ethylenically unsaturated monomers,
- from 30 to 50 parts by weight of polymer A2, and, if desired,
- from 0 to 10 parts by weight of surface-active alkoxylated alkylamine,
- from 0 to 20 parts by weight of hydroxyl-containing crosslinker, and/or
- from 0 to 5 parts by weight of reaction accelerator.

## Revendications

1. Procédé de préparation d'une dispersion aqueuse de polymère, contenant des particules de polymère dispersées d'au moins un polymère A1, que l'on peut obtenir par polymérisation en émulsion radicalaire semi-continue de monomères éthyléniquement insaturés, en présence d'un polymère A2, qui est constitué
- de 50 à 99,5 % en poids d'au moins un acide monocarboxylique et/ou dicarboxylique éthyléniquement insaturé,
- de 0,5 à 50 % en poids d'au moins un composé éthyléniquement insaturé, qui est choisi parmi les esters d'acides monocarboxyliques éthyléniquement insaturés et les hémi-esters et diesters d'acides dicarboxyliques éthyléniquement insaturés avec une amine présentant au moins un groupe hydroxyle, et
- de jusqu'à 20 % en poids d'au moins un autre monomère,
**caractérisé en ce qu'**au récipient de polymérisation, on amène conjointement, sans réalisation d'une émulsion, par l'intermédiaire d'un conduit d'amenée,
a) au moins une quantité partielle des monomères éthyléniquement insaturés,
b) une quantité partielle de l'eau,
c) au moins une quantité partielle du polymère A2, et éventuellement
d) des quantités partielles ou totales d'autres adjuvants.

2. Procédé suivant la revendication 1, **caractérisé en ce qu'**on amène au récipient réactionnel conjointement au moins 50 % en poids des monomères éthyléniquement insaturés et au moins 50 % en poids du polymère A2.

3. Procédé suivant l'une des revendications 1 et 2, **caractérisé en ce que**, comme autre adjuvant, on met en oeuvre au moins une alkylamine alcoxylée tensioactive, un agent de réticulation contenant des groupes hydroxy et/ou un accélérateur de réaction.

4. Procédé suivant la revendication 3, **caractérisé en ce que**, pour la polymérisation, on met en oeuvre
- 50 à 70 parties en poids de monomères éthyléniquement insaturés,
- 30 à 50 parties en poids de polymère A2, ainsi qu'éventuellement
- 0 à 10 parties en poids d'alkylamine alcoxylée tensioactive,
- 0 à 20 parties en poids d'agent de réticulation contenant des groupes hydroxy, et/ou
- 0 à 5 parties en poids d'accélérateur de réaction.
